# FASCICULE DE BREVET EUROPEEN

(11) **EP 0 623 491 B1**
(45) Date de publication et mention de la délivrance du brevet: **03.11.1999**
(21) Numéro de dépôt: 94490023.2
(22) Date de dépôt: 03.05.1994
(51) Int. Cl.: B60R 21/04, B32B 5/14

(54) **Produit stratifié destiné notamment à réaliser des éléments d'habillage intérieur de carroserie**
Mehrschichtwerkstoff, insbesondere für das Verkleiden vom Kraftfahrzeuginnen
Multilayered product, particularly adapted for use as vehicle interior cover sheets

(30) Priorité: 03.05.1993 FR 9305474
(43) Date de publication de la demande: 09.11.1994
(73) Titulaire: PLASTIC OMNIUM AUTO INTERIEUR, 69007 Lyon (FR)
(72) Inventeur: Le Lannou, Michel, F-59147 Gondecourt (FR)
(74) Mandataire: Duthoit, Michel

(56) Documents cités:
- WO-A-80/01892
- DE-A- 2 434 175
- DE-A- 3 220 856
- DE-A- 3 712 926
- DE-A- 4 008 173
- GB-A- 1 168 067
- US-A- 4 808 469

## Description

L'invention est relative à un produit stratifié, destiné notamment à réaliser des éléments d'habillage intérieur de carrosserie, tels que des panneaux de portières et/ou des tableaux de bord, constitué par une âme recouverte par une peau.

Il faut noter que, bien que cette invention ait été conçue pour réaliser des pièces dans le domaine de l'automobile, elle pourra néanmoins s'appliquer dans tous les domaines ou secteurs de l'activité dans lesquels on doit utiliser des produits stratifiés constitués par une âme recouverte par une peau.

Actuellement, ces éléments d'habillage intérieur de carrosserie sont en général réalisés en deux composants principaux, et notamment par une feuille de matière thermoplastique ou textile habituellement, appelée "peau", constituant la face externe d'habillage de l'élément intérieur de la carosserie de véhicule, et un insert en matière variée rigide supportant mécaniquement l'ensemble.

Il est utilisé aujourd'hui de nombreux processus de fabrication pour combiner ces deux éléments tels que par exemple le collage ou le thermoformage. Parfois, un espace limité par l'insert et la peau est rempli de mousse ou de résine thermodurcissable, telle que de la mousse de polyuréthane, pour réaliser une surface d'aspect agréable au toucher.

De telles techniques ne permettent pas d'obtenir des éléments d'habillage qui en pratique présentent des caractéristiques d'esthétique et d'absorption des contraintes mécaniques externes, telles que les chocs, selon un gradient d'absorption recherché.

Pour remédier à ces inconvénients, on a pensé utiliser, à l'intérieur des pare-chocs, des blocs de polypropylène expansé pour constituer un noyau d'absorption de chocs.

Dans ce cas, ce noyau est intégré à l'intérieur du pare-choc qui constitue une coquille de protection extérieure de la matière expansée.

Il est également connu de réaliser des panneaux de portes moulés en mousse de polystyrène armée de fibres de verre et imprégnés de polyuréthane. Pour ce faire, on réalise un sandwich à partir de mats de fibres de verre, recouverts d'une feuille de plastique, un textile tissé ou non-issé, une feuille de papier, un carton ou analogue, entre lesquels on place une couche de billes de polystyrène pré-expansé.

Du document DE-A-3.712.926, il est également connu un panneau comprenant une âme en mousse présentant une densité variable selon son épaisseur, et ceci sur toute sa surface. La variation de densité est obtenue par inclusion de matériaux de charge.

Toutefois, en pratique, ces techniques ne permettent pas d'obtenir un produit stratifié dont l'âme présente des caractéristiques de rigidité localisées et d'absorption des chocs assurant un gradient d'absorption.

Il en est de même des produits présentés dans les documents DE-A-2.434.175 et WO-A-80/.01.892 qui comprennent une âme dont la flexibilité reste constante par rapport à la surface globale desdits produits.

Il faut également noter que de nombreuses de ces techniques ne permettent pas non plus de remédier aux inconvénients inhérents à la fabrication en série d'éléments d'habillage d'intérieur de carrosserie, qui doivent présenter une peau conférant aux produits un aspect esthétique et agréable, tout en coopérant avec l'âme afin de ne pas nuire à la rigidité d'ensemble du produit.

Par ailleurs, on connaît du document DE-A-3.220.856 un procédé de fabrication de mousses formées de polystyrène et de polyphénylène-éther.

On connaît enfin du document DE-4.008.173, un produit stratifié constitué par une âme, réalisée à partir d'un matériau mono-composant expansé permettant des caractéristiques de rigidité et d'absorption des chocs, ladite âme étant recouverte au moins partiellement par au moins une peau et munie de zones localisées présentant une modification de densité. Toutefois, ledit produit ne présente pas de variations de densité dans l'épaisseur de l'âme au niveau desdites zones.

Le but de la présente invention est de proposer un produit stratifié, destiné notamment à réaliser des éléments d'habillage intérieur de carrosserie de véhicule, tels que des panneaux de portières et/ou des tableaux de bord, qui remédie aux inconvénients des produits actuellement connus, en présentant des propriétés satisfaisantes de rigidité et/ou d'absorption des contraintes mécaniques externes, telles que des chocs.

Un autre but de la présente invention est de proposer un produit stratifié, destiné notamment à réaliser des éléments d'habillage pour la confection de portières et/ou de tableaux de bord, qui permette d'accroître la sécurité des personnes présentes dans le véhicule.

Un autre but de la présente invention est de proposer un produit stratifié, destiné notamment à réaliser des éléments d'habillage d'intérieur de carrosserie, qui permette de fabriquer des produits stratifiés, pouvant être recyclés , ce qui accroît les capacités d'utilisation.

Un autre but de la présente invention est de proposer un produit stratifié, destiné notamment à réaliser des éléments d'habillage d'intérieur de carrosserie, qui offre des qualités d'esthétique et de confort accrues pour les utilisateurs.

D'autre buts et avantages de la présente invention apparaîtront au cours de la description qui va suivre qui n'est donnée qu'à titre indicatif et qui n'a pas pour but de la limiter.

Selon l'invention, le procédé de fabrication d'un produit stratifié, destiné notamment à réaliser des éléments d'habillage d'intérieur de carrosserie d'un véhicule, tels qu'un panneau de portière ou un tableau de bord, constitué par une âme, réalisée à partir d'un matériau mono-composant expansé permettant des caractéristiques de rigidité et d'absorption des chocs, ladite âme étant recouverte au moins partiellement par au moins une peau et munie de zones localisées présentant une modification de densité, est caractérisé en ce que l'on emploie, pour constituer ladite âme, un mélange de polystyrène et de polyphénylène-éther expansé, ou tout autre matériau plastique expansé présentant des caractéristiques de rigidité et d'absorption des contraintes mécaniques externes, ledit matériau expansé présentant des variations de densité dans l'épaisseur de l'âme, au niveau desdites zones localisées, par utilisation de billes ou particules expansées de densités différentes selon leur position dans l'épaisseur de l'âme, au niveau desdites zones localisées, en vue de conférer audit produit stratifié un gradient d'absorption des contraintes mécaniques.

L'invention concerne aussi un produit stratifié pouvant être obtenu par un tel procédé.

Comme nous l'avons également évoqué ci-dessus, la présente invention trouve une application particulière, mais non exclusive, à la fabrication de panneaux de portières ou de tableaux de bord, ou de tous autres éléments d'habillage intérieur d'une carrosserie de véhicule.

La présente invention sera mieux comprise à la lecture de la description suivante accompagnée des dessins en annexe parmi lesquels :
- la figure 1 est une vue schématique partielle en coupe d'un produit stratifié conforme à l'invention,
- la figure 2 est une vue schématique partielle en coupe d'un produit stratifié, conforme à l'invention, dans lequel l'âme présente des éléments de renforcement,
- la figure 3 est une vue schématique partielle en coupe d'un produit stratifié, conforme à la présente invention, illustrant plus particulièrement la répartition d'un matériau expansé.

La présente invention vise un produit stratifié, destiné à réaliser des éléments d'habillage intérieur d'une carrosserie de véhicule, tels que des panneaux de portières ou des tableaux de bord.

Bien que plus particulièrement développée dans le cadre de l'industrie automobile, la présente invention s'appliquera à tout type d'objet, qui présente une âme recouverte au moins partiellement par une peau et qui, en fonction de son application, doive présenter des propriétés suffisantes de rigidité et d'absorption de contraintes mécaniques externes telles que des chocs.

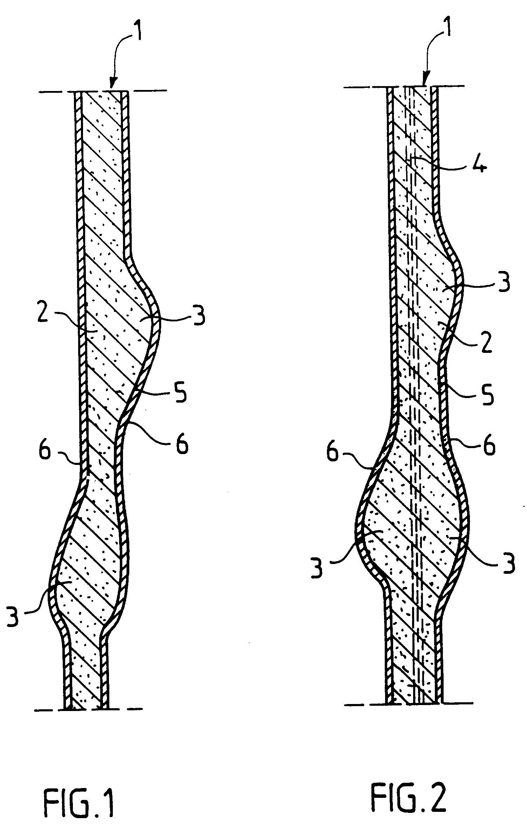

En se référant aux figures 1 et 2, on voit un produit stratifié 1 conforme à l'invention réalisé à partir d'un procédé de fabrication qui met en oeuvre des techniques classiques de plasturgie.

Pour cela, on réalise une âme 2 à partir d'un matériau mono-composant expansé présentant des caractéristiques de rigidité et d'absorption des contraintes mécaniques externes, telles que notamment des chocs.

Par matériau mono-composant, on comprend une âme formée par une même matière mais dont la densité n'est pas nécessairement constante, non seulement dans sa localisation mais aussi dans l'épaisseur de l'âme.

Cette âme 2 est réalisée de préférence en un matériau allégé, par exemple à partir d'un mélange de polystyrène-polyoxyphénylène dans des proportions adaptées à l'application et aux résultats recherchés.

A titre d'exemple, on pourra utiliser un mélange de polystyrène et de polyoxyphénylène d'un type connu sous la dénomination commerciale "Caril" de la Société "Shell" qui présente une densité comprise entre 20 à 300 g/l. Bien entendu, en fonction de cette densité, on obtiendra une rigidité et des propriétés d'absorption des contraintes mécaniques externes du produit stratifié 1 variable.

C'est ainsi que lorsque l'on désire fabriquer un produit stratifié 1 qui présente des propriétés d'élasticité supérieures et adaptées pour certaines des applications, on utilisera de préférence un mélange de polystyrène et de polyoxyphénylène d'une densité plus faible et, dans le cas contraire, lorsque l'on désire obtenir un produit stratifié 1 qui présente des caractéristiques de rigidité plus élevées, on utilisera une densité plus élevée.

Selon l'invention, le produit stratifié 1 comporte une âme 2 qui présente des variations de densité localisées en vue de conférer un gradient d'absorption des contraintes mécaniques externes et notamment des chocs.

C'est ainsi, comme le montre la figure 1 notamment, que l'on peut réaliser un produit stratifié 1 qui présente des zones 3 localisées dans lesquelles on a modifié la densité du matériau constitutif de l'âme 2, afin de conférer, dans cesdites zones, au produit stratifié 1 des propriétés de rigidité et de résistance aux contraintes mécaniques externes accrues.

On peut également prévoir, dans une variante, des zones 3 qui présentent une surépaisseur du matériau constitutif de l'âme avec ou sans modification de sa densité.

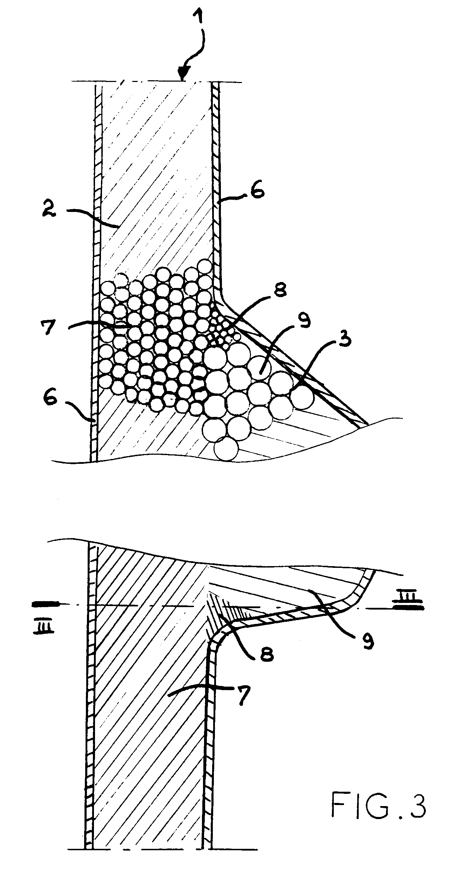

A titre d'exemple, la figure 3 montre la répartition de zones 3, localisées en 7, 8, 9 dont la densité est différente, et en particulier, une âme 2 présentant différentes densités d₁, d₂, d₃ dans l'épaisseur de l'âme, c'est-à-dire selon une coupe du produit III-III allant d'une peau 6 extérieure vers l'autre, dans les différentes zones respectives 7-9.

Par exemple, dans la zone 7, on prévoit une première densité d₁, tout au long du produit, pour conférer une certaine rigidité à ce dernier. En superposition, pour favoriser l'absorption des chocs, on prévoit une seconde densité d₂, inférieure à d₁, dans la zone 9, notamment en regard du conducteur ou/et du passager dans le cas d'application véhicule.

Enfin, accessoirement, pour accroître la résistance et la liaison entre les zones 7 et 9, on peut prévoir une zone 8 de "raccordement" de densité d₃, supérieure à d₁ et à d₂.

Sur la figure 3, on a schématisé partiellement par une variation de diamètre des billes du matériau mono-composant expansé, la variation de densité d₁,d₂,_{,}d₃ puis sur l'ensemble de la figure par une variation de hachures. Cette variation peut être obtenue par dépôts successifs de la matière, dans des densités différentes, dudit matériau mono-composant.

En outre, cela permet d'accroître la sécurité des personnes qui se trouvent dans le véhicule, notamment en cas de chocs violents, puisque ces zones 3 vont constituer des amortisseurs aux contraintes générées par ces chocs externes.

Il faut également noter que l'on pourrait, dans des variantes de réalisation, réaliser l'âme 2 à partir d'un matériau constitué par un mélange de polyoléfines ou de tout autre matériau plastique, par exemple du polypropylène qui présente des caractéristiques et des propriétés adaptées.

Afin d'accroître la rigidité et la résistance de ce produit stratifié 1, dans une forme de réalisation, telle qu'illustrée à la figure 2, on inclut dans l'âme 2 des éléments de renforcement 4, tels que des fibres de verre, des éléments grillagés métalliques ou plastiques, ou de la mousse de polyuréthane ou des inclusions diverses.

L'on recouvre ensuite au moins partiellement au moins l'une des faces 5 de l'âme 2 par une couche d'un matériau thermoplastique élastomère, tel que par exemple du santoprène (marque commerciale) ou du néoprène ou bien une couche de polychlorure de vinyle, de polyuréthane, de polyoléfines ou tous autres matériaux thermoplastiques pouvant être injectés, afin de constituer une peau 6.

Cette peau 6 peut être également constituée par d'autres éléments tels qu'une feuille d'un matériau textile, carton, papier que l'on dispose par collage par thermo-gainage en une seule opération sur l'âme 2 du produit stratifié 1 afin de conférer à celui-ci un aspect esthétique et agréable requis pour de telles applications.

Dans ces conditions, il est également envisageable, pour augmenter l'aspect esthétique du produit, selon la présente invention, que cette structure stratifiée comporte par exemple des éléments décoratifs en vue de constituer notamment des motifs ou des signes distinctifs.

On peut également prévoir, en fonction des besoins l'inclusion par des techniques de surmoulage, de pièces rapportées diverses.

C'est ainsi, que la présente invention trouvera une application particulière dans la fabrication d'éléments d'habillage intérieur de carrosserie de véhicule puisque dans ce domaine, on retrouve des contraintes décrites ci-dessus.

## Revendications

1. Procédé de fabrication d'un produit stratifié (1), destiné notamment à réaliser des éléments d'habillage d'intérieur de carrosserie d'un véhicule, tels qu'un panneau de portière ou un tableau de bord, constitué par une âme (2), réalisée à partir d'un matériau mono-composant expansé permettant des caractéristiques de rigidité et d'absorption des chocs, ladite âme (2) étant recouverte au moins partiellement par au moins une peau (6) et munie de zones localisées présentant une modification de densité, caractérisé en ce que l'on emploie, pour constituer ladite âme (2), un mélange de polystyrène et de polyphénylène-éther expansé, ou tout autre matériau plastique expansé présentant des caractéristiques de rigidité et d'absorption des contraintes mécaniques externes, ledit matériau expansé présentant des variations de densité dans l'épaisseur de l'âme, au niveau desdites zones localisées, par utilisation de billes ou particules expansées de densités différentes selon leur position dans l'épaisseur de l'âme, au niveau desdites zones localisées, en vue de conférer audit produit stratifié un gradient d'absorption des contraintes mécaniques.

2. Produit pouvant être obtenu selon le procédé de fabrication de la revendication 1.

3. Produit stratifié selon la revendication 2, caractérisé en ce que la peau (6) est réalisée dans un matériau thermoplastique.

4. Produit stratifié selon la revendication 2, caractérisé en ce que l'âme (2) comporte des éléments de renforcement (4).

5. Produit stratifié selon la revendication 2, caractérisé en ce que l'âme (2) comporte des inclusions.

6. Application du produit stratifié selon l'une quelconque des revendications 2 à 5 à la confection d'éléments d'habillage intérieur d'une carrosserie d'un véhicule tels que notamment des tableaux de bord et/ou des panneaux de portière.

## Claims

1. Process for manufacturing a laminated product (1), intended, in particular, for making items of interior trim for a vehicle body, such as a door panel or a dashboard, constituted by a core (2), made from an expanded single-component material permitting rigidity and shock absorption characteristics, the said core (2) being covered, at least partially, by a skin (6) and provided with localised zones having a change in density, characterised in that use is made, to form the said core (2), of a mixture of expanded polyphenylene ether and polystyrene, or any other expanded plastic material having characteristics of rigidity and of absorption of external mechanical stresses, the said expanded material having variations in density in the thickness of the core, in the area of the said localised zones, through the use of expanded particles or beads of different densities according to their position in the thickness of the core, in the area of the said localised zones, with a view to providing the said laminated product with a mechanical stress absorption gradient.

2. Product capable of being obtained according to the manufacturing process of claim 1.

3. Laminated product according to claim 2, characterised in that the skin (6) is made of a thermoplastic material.

4. Laminated product according to claim 2, characterised in that the core (2) comprises reinforcing elements (4).

5. Laminated product according to claim 2, characterised in that the core (2) comprises inclusions.

6. Application of the laminated product according to any one of claims 2 to 5 to the production of items of interior trim for a vehicle body such as, in particular, dashboards and/or door panels.

## Patentansprüche

1. Verfahren zur Herstellung eines mehrschichtigen Produkts (1), nämlich zur Herstellung von Innenverkleidungsteilen für die Karosserie von Fahrzeugen, wie einer Türpolsterungsplatte oder eines Armaturenbrettes, bestehend aus einem Kern (2), der aus einem Einkomponent-Schaumstoff gefertigt ist, das Steifheits- und Schlagfestigkeitseigenschaften erlaubt, wobei der genannte Kern (2) mindestens zum Teil mit mindestens einer Haut (6) bedeckt und mit örtlichen Bereichen versehen ist, die eine verschiedene Dichte aufweisen, dadurch gekennzeichnet, daß zum Bilden des genannten Kernes (2) eine Mischung aus Polystyrol- und Polyphenylenätherschaum, oder irgendeinem anderen expandierfähigen Kunststoff verwendet wird, der Steifheits- und äußere mechanische Beanspruchungsfestigkeitseigenschaften aufweist, wobei der genannte Schaumstoff über die Kerndicke, im Bereich der genannten örtlichen Bereiche, verschiedene Dichten aufweist, durch Verwendung von Schaumkugeln oder - Partikeln verschiedener Dicken je nach deren Lage in der Kerndicke, im Bereich der genannten örtlichen Bereiche, um dem genannten mehrschichtigen Produkt einen mechanischen Beanspruchungsfestigkeitsgradienten zu vermitteln.

2. Produkt, das gemäß dem Herstellungsverfahren nach Anspruch 1 erhalten werden kann.

3. Mehrschichtiges Produkt nach Anspruch 2, dadurch gekennzeichnet, daß die Haut (6) aus einem thermoplastischen Kunststoff herghestellt ist.

4. Mehrschichtiges Produkt nach Anspruch 2, dadurch gekennzeichnet, daß der Kern (2) Verstärkungsteile (4) umfaßt.

5. Mehrschichtiges Produkt nach Anspruch 2, dadurch gekennzeichnet, daß der Kern (2) Einschlüße umfaßt.

6. Verwendung des mehrschichtigen Produkts nach irgendeinem der Ansprüche 2 bis 5 für die Herstellung von von Innenverkleidungsteilen für die Karosserie von Fahrzeugen, wie nämlich Armaturenbrettern und Türenpolsterungsplatten.
